Europäisches Patentamt

European Patent Office

Office européen des brevets

(11) Publication number: **0 399 334**
**A2**

# (12) EUROPEAN PATENT APPLICATION

(21) Application number: **90109105.8**

(22) Date of filing: **15.05.90**

(51) Int. Cl.5: **B23K 9/28**

(30) Priority: **23.05.89 JP 129605/89**
**23.05.89 JP 129606/89**

(43) Date of publication of application:
**28.11.90 Bulletin 90/48**

(84) Designated Contracting States:
**DE GB**

(71) Applicant: **Matsushita Electric Industrial Co., Ltd.**
**1006, Oaza Kadoma**
**Kadoma-shi, Osaka-fu(JP)**

(72) Inventor: **Yoshinaka, Minoru**
**7-15, Inadahonmachi 3-chome**
**Higashiosaka-shi, Osaka-fu(JP)**
Inventor: **Tsuge, Mitsuo**
**2-49, Seiwadaihigashi 2-chome**
**Kawanishi-shi, Hyogo-ken(JP)**
Inventor: **Yamamoto, Hisao**
**541-8, Kishiwada**
**Kadoma-shi, Osaka-fu(JP)**
Inventor: **Bito, Toshiaki**
**22-26, Naritahigashimachi**
**Neyagawa-shi, Osaka-fu(JP)**
Inventor: **Shibano, Naoki**
**746-11, Uenoshibamukogaoka-cho 5-chome**
**Sakai-shi, Osaka-fu(JP)**

(74) Representative: **Eisenführ, Speiser & Strasse**
**Martinistrasse 24**
**D-2800 Bremen 1(DE)**

(54) **Method of producing contact tip.**

(57) A method of producing a contact tip constituted by a core for supplying welding current to a consumable electrode and a tip body for receiving the core, the contact tip being formed, at its central portion, with a through-hole for passing the consumable electrode therethrough, the method comprising the steps of: forming the core and the tip body by forging; and press fitting the core into the tip body.

**F i g. 5 (a)**

# METHOD OF PRODUCING CONTACT TIP

## BACKGROUND OF THE INVENTION

The present invention relates to a method of producing a contact tip for use in a consumable electrode type arc welding torch.

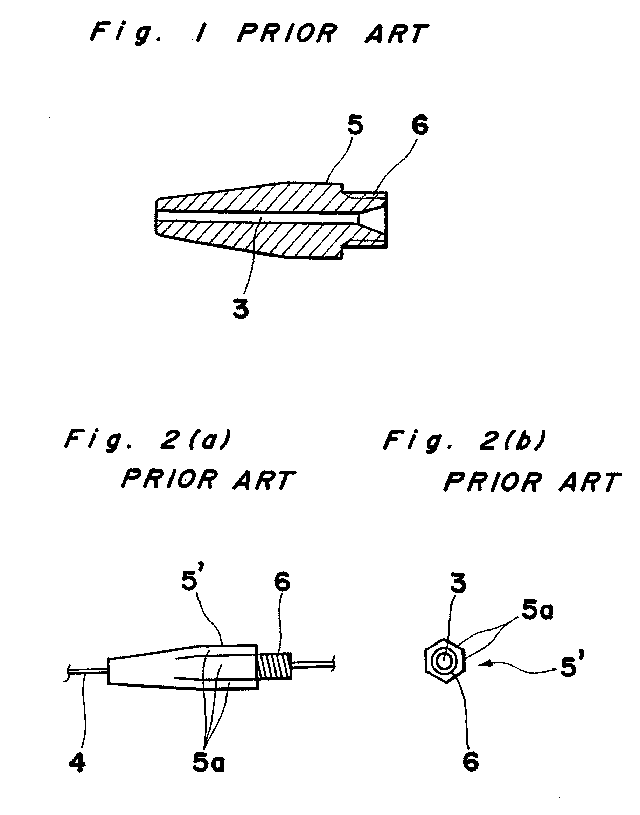

Fig. 1 shows a known contact tip 5. The contact tip 5 is formed with a central through-hole 3 for receiving a consumable electrode, e.g. a wire. The contact tip 5 has a guide function of feeding the wire to a welding spot via the through-hole 3 and a power supply function of supplying welding current to the wire. The contact tip 5 has a threaded portion 6 so as to be mounted on a welding torch through engagement of the threaded portion 6 with the welding torch.

Since the contact tip 5 supplies welding current to the wire through its contact with the wire and a portion of the wire held in contact with the contact tip 5 is heated to high temperatures at the time of supply of welding current to the wire, the through-hole 3 is worn excessively by feeding the wire through the through-hole 3, so that the contact tip 5 may not be able to exercise the guide function and the power supply function referred to above.

In order to obviate such an inconvenience, the contact tip 5 is wholly made of chromium-copper alloy having excellent abrasion resistance at high temperatures.

Figs. 2(a) and 2(b) show another prior art contact tip 5′ having the through-hole 3. The through-hole 3 of the contact tip 5′ has diameters of 0.9 mm, 1.0 mm, 1.2 mm, 1.4mm, 1.6 mm, etc. for wires 4 having various diameters, respectively such that a proper wire 4 and the corresponding contact tip 5′ are selected in accordance with materials to be welded. However, since the contact tips 5′ having the through-holes 3 of different diameters, respectively produce external appearances substantially identical with each other, an identification sign indicative of a diameter of the through-hole 3, for example, "M 12" representing 1.2 mm is marked on each of the contact tips 5′ so as to enable an operator to discriminate the contact tips 5′ from each other.

Conventionally, a plurality of flat faces 5a are formed on an outer periphery of the contact tip 5′ such that the contact tip 5′ is fastened to the welding torch through engagement of the threaded portion 6 with the welding torch by gripping the flat faces 5a with a wrench. The prior art contact tip 5′ is obtained from a hexagonal rod by machining the hexagonal rod.

However, the above mentioned conventional contact tips are wholly made of expensive chromium-copper alloy, thereby resulting in great rise of the material cost and slight drop of machinability.

Furthermore, since a threading process of the threaded portion 6 is performed by thrusting the rotating contact tip 5′ against a fixed round die, rotations of the contact tip 5′ are unstable in an axial direction of the threaded portion 6 and it is impossible to mark the identification sign on the rotating contact tip 5′. Therefore, marking of the identification sign on the contact tip 5, is performed after the threading process. Namely, in the prior art contact tip 5′, the threaded portion 6 is obtained by threading by the round die a portion of the hexagonal rod, which is machined to a diameter of the threaded portion 6. At this time, rotations imparted to the contact tip 5′ become unstable and it is impossible to mark the identification sign simultaneously with threading of the threaded portion 6. Meanwhile, in case the identification sign is marked on each of all the six flat faces of the hexagonal rod, the marking process is required to be performed six times.

Meanwhile, it is known that the contact tip is divided into a core and a tip body. The core is formed with the through-hole for receiving the wire and the tip body is formed with a bore for press fitting the core thereinto. However, in the known method, the through-hole of the core and the bore of the tip body are formed by drilling. Furthermore, the tip body has the threaded portion for fastening the tip body to the welding torch and the threaded portion is worked to the diameter of the threaded portion by machining. Accordingly, loss of material of the contact tip reaches about 25 wt.% of whole material of the contact tip. Furthermore, in this known method, since fracture of a drill may happen during drilling, about 8 sec. is required for drilling.

## SUMMARY OF THE INVENTION

Accordingly, an essential object of the present invention is to provide, with a view to eliminating the above described disadvantages inherent in conventional production methods, a method of producing a contact tip divided functionally into a core and a tip body, which comprises the steps of: working the core and the tip body by forging; press fitting the core into the tip body or preliminarily press fitting the core into the tip body; and pressure welding the core and the tip body by forging. In the production method of the present invention, threading of a threaded portion of the tip body and marking of an identification sign indicative of a diameter of a through-hole of the core, on the tip body are performed simultaneously in a subsequent rolling process by rolling the contact tip.

In the production method of the present invention, the minimum portion (core) including the through-hole for guiding a wire and supplying welding current to the wire is made of hard and electrically conductive metal having excellent heat resistance and abrasion resistance, while the tip body is made of inexpensive and electrically conductive metal. Since the tip body occupies a major portion of the contact tip, material cost of the contact tip as a whole can be reduced greatly.

Meanwhile, in the production method of the present invention, the through-hole for receiving the wire and a bore for press fitting the core thereinto are, respectively, formed on the core and the tip body by forging. Therefore, loss of material of the contact tip can be reduced to less than 1 wt.% of whole material of the contact tip. Furthermore, since forging is employed in place of drilling in order to form the through-hole and the bore on the core and the tip body, respectively, so that fracture of a drill during drilling of the through-hole and the bore does not take place and thus, experiments reveal that only 0.5-0.8 sec. is required to form the through-hole and the bore on the core and the tip body, respectively by forging.

Moreover, in the production method of the present invention, since thread rolling of the threaded portion and marking of the identification sign indicative of the diameter of the through-hole of the core, on the tip body, which have been conventionally required to be performed in separate processes, can be performed simultaneously in one process, thereby resulting in reduction of the number of processes. In addition, since thread rolling and marking are performed simultaneously, inspection of external appearance of the contact tip after thread rolling and marking is required to be performed only once, thus resulting in reduction of burden of inspection of the contact tip.

BRIEF DESCRIPTION OF THE DRAWINGS

This object and features of the present invention will become apparent from the following description taken in conjunction with the preferred embodiments thereof with reference to the accompanying drawings, in which:

Fig. 1 is a sectional view of a prior art contact tip (already referred to);

Figs. 2(a) and 2(b) are a front elevational view and a side elevational view of another prior art contact tip (already referred to);

Figs. 3(a) and 3(b) are a front elevational view and a side elevational view of a contact tip produced by a production method according to a first embodiment of the present invention, respectively;

Fig. 4(a) is a view similar to Fig. 3(a), particularly showing a modification thereof;

Fig. 4(b) is a sectional view taken along the line IV(b)-IV(b) in Fig. 4(a);

Figs. 5(a) to 5(d) are sectional views showing various constructions employed in the contact tip of Fig. 4(a);

Figs. 6(a) to 6(h) are views showing processes for forging a core of the contact tip of Fig. 3(a);

Figs. 7(a) to 7(g) are views showing processes for forging a tip body of the contact tip of Fig. 3(a);

Figs. 8(a) to 8(e) are views showing processes for forging a core of a contact tip produced by a production method according to a second embodiment of the present invention;

Figs. 9(a) to 9(e) are views showing processes for forging a tip body of the contact tip of Figs. 8(a) to 8(e);

Fig. 10 is a perspective view showing a state in which the core of Fig. 8(e) has been preliminarily press fitted into the tip body of Fig. 9(e);

Figs. 11(a) to 11(c) are views showing processes for forging the core and the tip body of Fig. 10;

Fig. 12(a) is a side elevational view showing opposed movable and fixed die members for performing thread rolling and marking on the tip body of the contact tip of Fig. 3(a); and

Fig. 12(b) is a front elevational view of the movable die member of Fig. 12(a).

Before the description of the present invention proceeds, it is to be noted that like parts are designated by like reference numerals throughout several views of the accompanying drawings.

DETAILED DESCRIPTION OF THE INVENTION

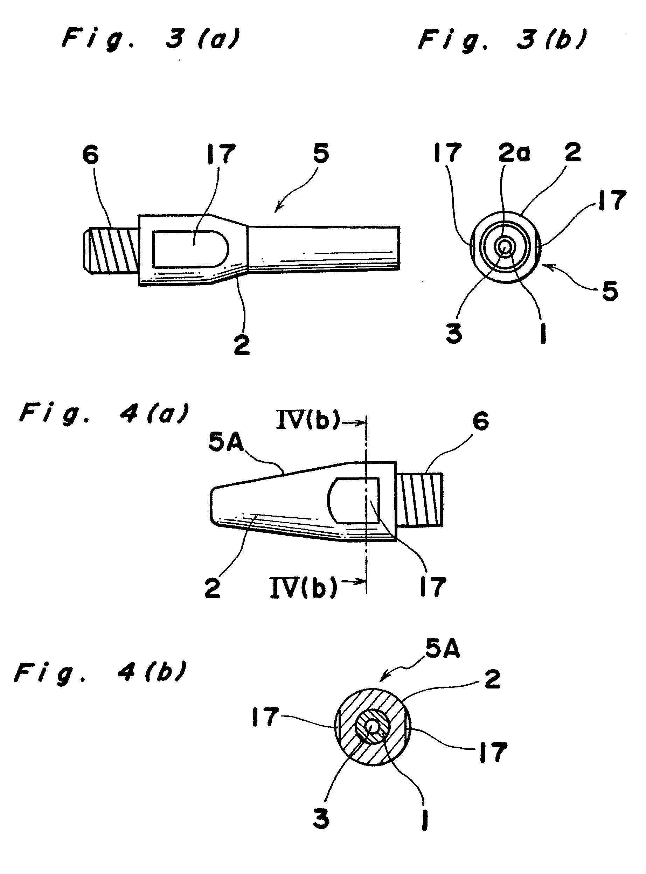

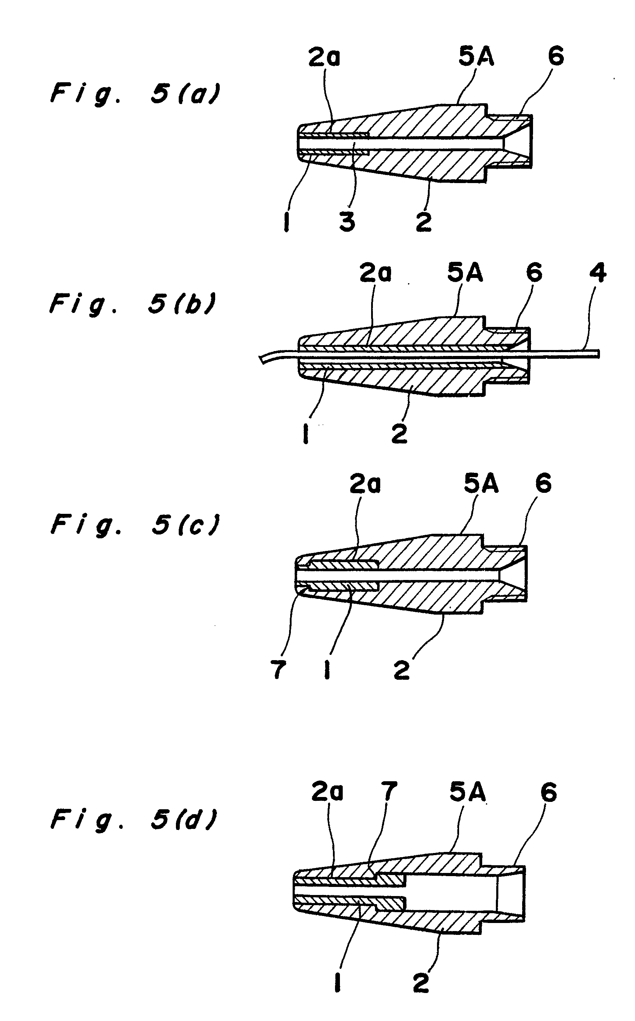

Referring now to the drawings, there is shown in Figs. 3(a) and 3(b), a contact tip 5 produced by a production method according to a first embodiment of the present invention. The contact tip 5 includes a core 1 and a tip body 2 and has a threaded portion 6 for fastening the tip body 2 to a welding torch (not shown). The core 1 is formed with a through-hole 3, while the tip body 2 is formed with a bore 2a for pressing fitting the core 1 thereinto. In order to supply welding current to a wire 4 (Fig. 5(b)), a diameter of the through-hole 3 of the core 1 is so set as to be about 0.2 mm larger than that of the wire 4.

The core 1 and the tip body 2 are fastened to each other quite securely by press fitting of the core 1 into the tip body 2. Therefore, at the time of feed of the wire 4, the core 1 is fixed to the tip body 2 without being axially thrusted out of the tip body 2. Meanwhile, even in case a large welding current is applied to the contact tip 5, heat is scarcely generated at a press contact portion between the core 1 and the tip body 2. The contact tip 5 is fastened to the welding torch by the threaded portion 6. As shown in Figs. 3(a) and 3(b), two flat faces 17 are formed on an outer periphery of the tip body 2 such that the contact tip 5 is fastened to the welding torch through engagement of the threaded portion 6 with the welding torch by gripping the flat faces 17 with a wrench. The flat faces 17 have been hitherto formed by machining. However, in the present invention, the flat faces 17 are formed by forging simultaneously with forging of the tip body without producing chips.

Figs. 4(a) and 4(b) show a contact tip 5A which is a modification of the contact tip 5. Figs. 5(a) to 5(d) show various constructions employed in the contact tip 5A. In Fig. 5(a), the bore 2a axially extends through a portion of the tip body 2 such that the core 1 extends axially through the portion of the tip body 2. In Fig. 5(b), the bore 2a extends through the tip body 2 such that the core 1 extends through the tip body 2. In Figs. 5(c) and 5(d), a step portion 7 for preventing the core 1 from slipping out of the tip body 2 is formed at a front end and a rear end of the core 1, respectively so as to strengthen mechanical coupling between the core 1 and the tip body 2.

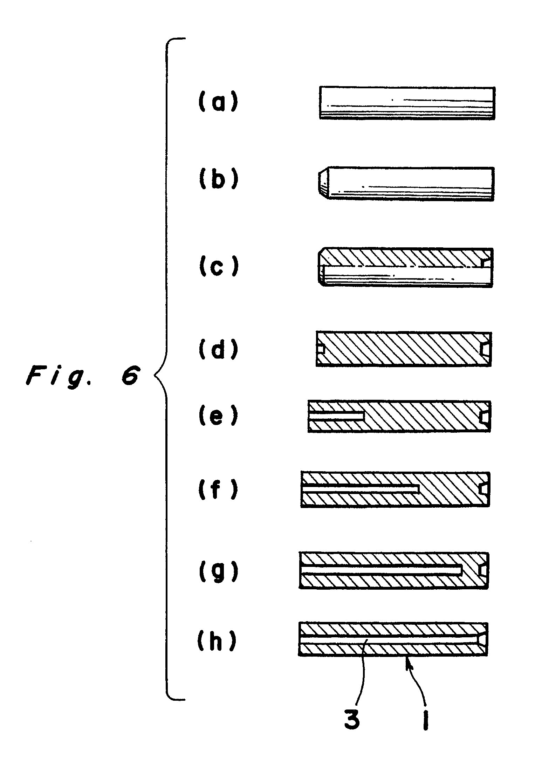

Hereinbelow, processes for forging the core 1 of the contact tip 5 are described with reference to Figs. 6(a) to 6(h). Initially, a blank is cut off from a round bar as shown in Fig. 6(a). Then, one end of the blank undergoes forming as shown in Fig. 6(b) and a recess is formed at the other end of the blank as shown in Fig. 6(c). Subsequently, piercing is performed at the one end of the blank gradually deeply into the blank as shown in Figs. 6(d) to 6-(g). Finally, piercing is performed on the recess at the other end of the blank so as to form the through-hole 3 and an outer periphery of the blank undergoes forming, whereby the core 1 is obtained as shown in Fig. 6(h).

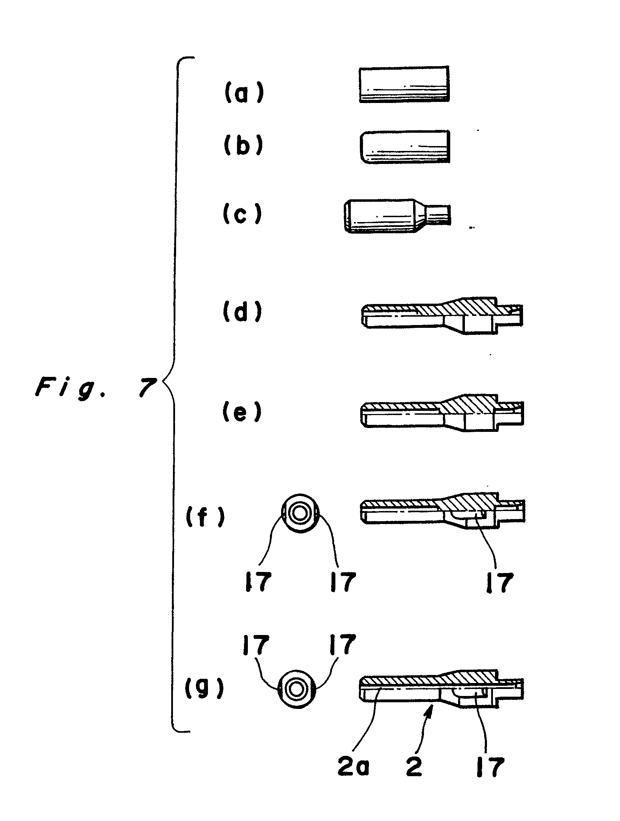

Furthermore, processes for forging the tip body 2 of the contact tip 5 are described with reference to Figs. 7(a) to 7(g). Initially, a blank is cut off from a round bar as shown in Fig. 7(a). Then, one end of the blank undergoes forming as shown in Fig. 7(b). Subsequently, an outer periphery of the blank undergoes forming such that a portion to be used for the threaded portion 6 is formed at the one end of the blank as shown in Fig. 7(c). Then, a recess is formed at the one end of the blank and piercing is performed at the other end of the blank as shown in Fig. 7(d). Subsequently, piercing is further performed at both the ends of the blank as shown in Fig. 7(e). The opposite flat faces 17 are formed on the outer periphery of the blank as shown in Fig. 7-(f). Thereafter, piercing is further performed at both the ends of the blank so as to form the bore 2a extending through the blank, while the outer periphery of the blank undergoes forming, whereby the tip body 2 which is not formed with the threaded portion 6 is obtained as shown in Fig. 7(g).

The flat faces 17 are formed in the forging process of Fig. 7(f) as described above but may also be formed in a subsequent forging process performed after preliminary press fitting of the core 1 into the tip body 2. Furthermore, the two flat faces 17 are formed in Fig. 7(f) but the flat faces 17 may be more than two in number.

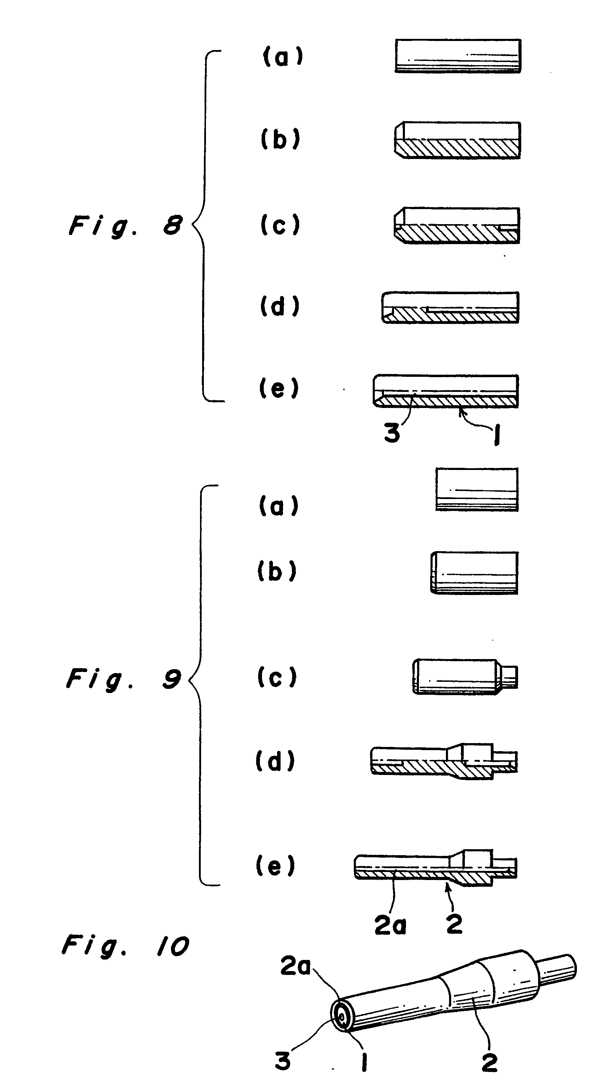

Figs. 8(a) to 8(e) show processes for forging the core 1 of the contact tip 5 in a production method according to a second embodiment of the present invention. Initially, a blank is cut off from a round bar as shown in Fig. 8(a). Then, one end of the blank undergoes forming as shown in Fig. 8(b). Thereafter, a recess is formed at the one end of the blank and piercing is performed at the other end of the blank as shown in Fig. 8(c). Subsequently, piercing is further performed at the other end of the blank as shown in Fig. 8(d). Then, piercing is performed at the one end of the blank so as to form the through-hole 3 and an outer periphery of the blank undergoes forming, whereby the core 1 is obtained as shown in Fig. 8(e).

Figs. 9(a) to 9(e) show processes for forging the tip body 2 of the contact tip 5 of Figs. 8(a) to 8-(e). Initially, a blank is cut off from a round bar as shown in Fig. 9(a). Then, one end of the blank undergoes forming as shown in Fig. 9(b). Subsequently, an outer periphery of the blank undergoes forming such that a portion to be used for the threaded portion 6 is formed at the other end of the blank as shown in Fig. 9(c). Thereafter, piercing is performed at both the ends of the blank as shown in Fig. 9(d) until the bore 2a extending through the blank is formed as shown in Fig. 9(e).

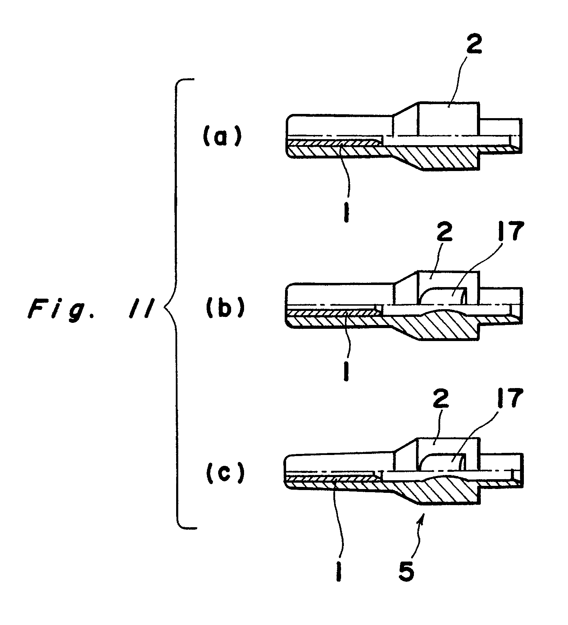

The core 1 of Fig. 8(e) is preliminarily press fitted into the bore 2a of the tip body 2 of Fig. 9(e) as shown in Fig. 10. Then, the core 1 and the tip body 2 are subjected to pressure welding as shown in Fig. 11(a). Then, the flat faces 17 are formed on the outer periphery of the tip body 2 as shown in Fig. 11(b). Subsequently, the tip body 2 is subjected to staking such that coupling between the core 1 and the tip body 2 is further strengthened as shown in Fig. 11(c).

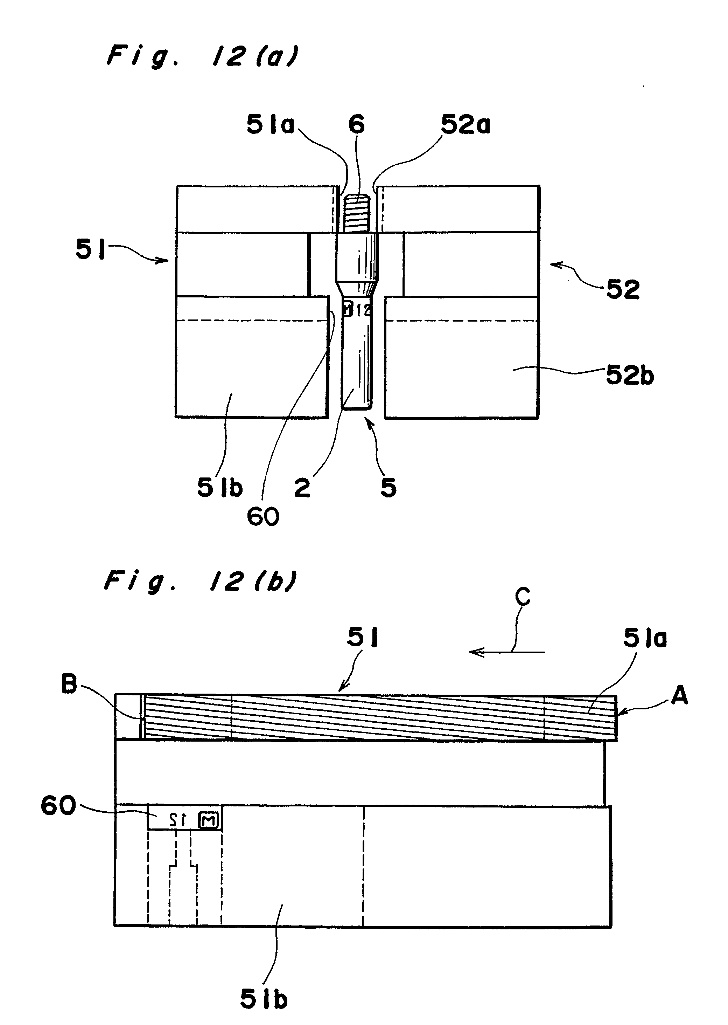

Figs. 12(a) and 12(b) show opposed movable and fixed die members 51 and 52 for performing thread rolling of the threaded portion 6 and marking on the tip body 2 having the core 1 press fitted thereinto. The movable die member 51 has a threading die 51a and a base portion 51b having a marking die 60. Meanwhile, the fixed die 52 has a threading die 52a and a base portion 52b. Initially, the tip body 2 is gripped between the movable and fixed die members 51 and 52 at the point A of the movable die member 51 in Fig. 12(b). Then, the movable die member 51 is displaced relative to the fixed die member 52 such that the rolling tip body 2 travels in the direction of the arrow C from the point A to the point B in Fig. 12(b). Thus, the threaded portion 6 is formed on the tip body 2 by the threading dies 51a and 52a, while an identification sign indicative of a diameter of the through-hole 3 of the core 1 of the contact tip 5, for example, "M 12" representing 1.2 mm is marked on the tip body 2 by the marking die 60 of the movable die member 51 as shown in Fig. 12(a), whereby the contact tip 5 can be obtained. If marking is performed by using a marking-off pin, marking is restricted to the flat faces 17. However, in the present invention, since marking is performed with the use of the marking die 60 by rolling the tip body 2, marking is not restricted to the flat faces 17 but can be performed at any location, e.g. a cylindrical portion of the tip body 2. Furthermore, area of marking can be easily expanded from a portion of an outer periphery of the tip body 2 to a whole outer periphery of the tip body 2.

As is clear from the foregoing description, the following effects (1) to (6) can be achieved in the production method of the present invention.

(1) The contact tip is constituted by the core and the tip body and the core and the tip body are produced by forging without producing chips. Therefore, loss of material of the contact tip is reduced without incurring deterioration of high performance of the contact tip, thereby resulting in drop of material cost of the contact tip.

(2) Speed for producing the core and the tip body is raised, by forging, to about 10 times that of the conventional methods, thus resulting in improvement of productivity.

(3) Portions of the tip body, on which the flat faces for engaging the wrench and the threaded portion are formed, can be worked easily.

(4) Thread rolling and marking can be performed on the contact tip simultaneously. Therefore, loss of material of the contact tip can be reduced by maintaining high performance of the contact tip, thus resulting in drop of material cost of the contact tip.

(5) Speed for performing thread rolling and marking on the tip body is raised to about 10 times that of the conventional methods, thereby resulting in rise of productivity.

Although the present invention has been fully described by way of example with reference to the accompanying drawings, it is to be noted here that various changes and modifications will be apparent to those skilled in the art. Therefore, unless otherwise such changes and modifications depart from the scope of the present invention, they should be construed as being included therein.

**Claims**

1. A method of producing a contact tip constituted by a core for supplying welding current to a consumable electrode and a tip body for receiving said core, said contact tip being formed, at its central portion, with a through-hole for passing said consumable electrode therethrough, the method comprising the steps of:
forming said core and said tip body by forging; and
press fitting said core into said tip body.

2. A method as claimed in Claim 1, further comprising the step of forming on said core and said tip body, a stop portion for preventing said core from slipping out of said tip body.

3. A method as claimed in Claim 1, further comprising the step of forming on said tip body, a plurality of flat faces for engaging a wrench.

4. A method as claimed in Claim 1, further comprising the steps of subjecting said core and said tip body to staking so as to prevent said core from slipping out of said tip body.

5. A method as claimed in Claim 1, further comprising the step of simultaneously performing, by rolling said tip body, thread rolling for forming a threaded portion on said tip body and marking on said tip body, an identification sign indicative of a diameter of said through-hole.

6. A method as claimed in Claim 5, wherein the identification sign is marked on a whole outer periphery of a cylindrical portion of said tip body.

7. A method as claimed in Claim 5, wherein the identification sign is marked on a portion of an outer periphery of a cylindrical portion of said tip body.

## Fig. 1 PRIOR ART

**5**  **6**

**3**

## Fig. 2(a)
### PRIOR ART

**5'**  **6**

**4**  **5a**

## Fig. 2(b)
### PRIOR ART

**3**  **5a**

**5'**

**6**

*Fig. 3 (a)*

*Fig. 3 (b)*

*Fig. 4 (a)*

*Fig. 4 (b)*

Fig. 5(a)

2a        5A      6

1    3    2

Fig. 5(b)

2a      5A    6    4

1        2

Fig. 5(c)

2a      5A    6

7    1    2

Fig. 5(d)

2a    7    5A      6

1        2

Fig. 6

(a)

(b)

(c)

(d)

(e)

(f)

(g)

(h)

3    1

*Fig. 7*

(a)

(b)

(c)

(d)

(e)

(f)

17      17                    17

17        17

(g)

2a    2    17

Fig. 8

(a)

(b)

(c)

(d)

(e)

3    1

Fig. 9

(a)

(b)

(c)

(d)

(e)

2a    2

Fig. 10

2a

3    1    2

**2**

**(a)**

**1**

**2**      **17**

*Fig. 11*      **(b)**

**1**

**2**      **17**

**(c)**

**1**      **5**

*Fig. 12(a)*

*Fig. 12(b)*